# EUROPEAN PATENT APPLICATION

(11) **EP 4 582 350 A1**
(43) Date of publication of application: **09.07.2025**
(21) Application number: 23859286.9
(22) Date of filing: 28.08.2023
(51) Int. Cl.: B65D 5/06

(54) **SHEET-LIKE COMPOSITE LAYER AND PACKAGING SHEET**

(30) Priority: 30.08.2022 CN 202211054102
(71) Applicant: SIG Services AG, 8212 Neuhausen am Rheinfall (CH)
(72) Inventor: LIU, Yan, Suzhou, Jiangsu 215126 (CN); NING, Shuli, Suzhou, Jiangsu 215126 (CN)
(74) Representative: Herzog IP Patentanwalts GmbH
(86) International application number: PCT/CN2023/115179
(87) International publication number: WO 2024/046254

(57) **Abstract**

A sheet-like composite layer, comprising: a carrier layer (10), a barrier layer (30), and an adhesive layer (20). The barrier layer is superposed on the carrier layer, and the adhesive layer is located between the carrier layer and the barrier layer and is configured to adhere the carrier layer and the barrier layer. The carrier layer has an opening (11), and the barrier layer and the adhesive layer are configured to extend along a plane where the carrier layer is located and to cover the opening. The carrier layer comprises an edge (110) surrounding the opening, gap portions (G1 and G2) are formed between the adhesive layer and the barrier layer in a thickness direction of the carrier layer, and the gap portions are configured to extend along part of the edge. In the sheet-like composite layer, by enabling the gap portions to extend along only part of the edge, a force required for a film at the opening can be reduced, thereby facilitating the opening of packages, and the light-leakage area can be reduced, thereby facilitating long-term storage of content. Further provided is a packaging sheet (100) comprising the sheet-like composite layer.

## Description

### CROSS-REFERENCE TO RELATED APPLICATIONS

This application is based upon and claims priority to Chinese Patent Application No. 202211054102.2, filed on August 30, 2022, and entitled "Sheet-like Composite Layer and Packaging Sheet", which is hereby incorporated by reference in its entirety and constitutes a part of this application.

### TECHNICAL FIELD

The present disclosure relates to the field of packaging, and in particular, to a sheet-like composite layer and a packaging sheet.

### BACKGROUND

Generally, disposable packaging containers for liquid food such as milk and juice, may be formed by cutting, shaping, filling, and sealing a sheet-like composite layer in the form of a continuous web. The sheet-like composite layer may include a plurality of laminated layers. For example, the plurality of layers may include an ink layer for printing a pattern, a carrier layer providing a support function, an aluminum foil layer for blocking water and oxygen, etc.

### SUMMARY

Examples of the present disclosure provide a sheet-like composite layer and a packaging sheet.

According to a first aspect of the present disclosure, provided is a sheet-like composite layer, including: a carrier layer; a barrier layer, superposed on the carrier layer; and an adhesive layer, located between the carrier layer and the barrier layer and configured to adhere the carrier layer and the barrier layer; where the carrier layer has an opening, and the barrier layer and the adhesive layer are configured to extend along a plane where the carrier layer is located and to cover the opening, where the carrier layer includes an edge surrounding the opening, a gap portion is formed between the adhesive layer and the barrier layer in a thickness direction of the carrier layer, and the gap portion is configured to extend along part of the edge.

**In** at least some examples, the carrier layer includes a sidewall located at the edge, and the sidewall includes a first sidewall and a second sidewall opposite to each other in a first direction parallel to the plane where the carrier layer is located; and the gap portion includes a first gap portion and a second gap portion spaced apart from each other in the first direction; where the first gap portion is configured to extend along part of the first sidewall, and the second gap portion is configured to extend along part of the second sidewall.

**In** at least some examples, the first gap portion and the second gap portion are not connected to each other.

**In** at least some examples, the first gap portion includes a first end and a second end opposite to each other in a second direction parallel to the plane where the carrier layer is located and perpendicular to the first direction; and the second gap portion includes a third end and a fourth end opposite to each other in the second direction; where the first end and the third end are spaced apart from each other in the first direction, and the second end and the fourth end are spaced apart from each other in the first direction.

In at least some examples, the sheet-like composite layer further includes: an outer cover layer, superposed on the carrier layer and located on an opposite side of the carrier layer to the adhesive layer and the barrier layer, where the outer cover layer is configured to extend and to cover the opening, and the outer cover layer is adhered with the adhesive layer in the opening.

In at least some examples, an edge void is defined between the carrier layer, the adhesive layer, and the outer cover layer; where the gap portion is located in the edge void.

In at least some examples, the carrier layer includes a sidewall located at the edge, and the sidewall extends along the entire edge of the carrier layer, such that the edge void extends along the entire edge of the carrier layer.

In at least some examples, the gap portion includes a first gap portion and a second gap portion spaced apart from each other in the first direction; the edge void includes a first void portion and a second void portion opposite to each other in the first direction; and the first gap portion is located in the first void portion, and the second gap portion is located in the second void portion.

In at least some examples, the edge void further includes a third void portion and a fourth void portion opposite to each other in the second direction, and the first void portion, the second void portion, the third void portion, and the fourth void portion are connected end to end to constitute the edge void; where the first gap portion and the second gap portion are provided in neither of the third void portion and the fourth void portion.

In at least some examples, the first gap portion and the second gap portion each include a protrusion provided on the adhesive layer, and in the thickness direction of the carrier layer, the protrusion protrudes in a direction away from the barrier layer.

In at least some examples, at least one of the first gap portion and the second gap portion has a first dimension in the first direction and a second dimension in the second direction parallel to the plane where the carrier layer is located and perpendicular to the first direction; where the second dimension is greater than the first dimension.

In at least some examples, the opening has an opening dimension in the second direction, and the second dimension of the at least one of the first gap portion and the second gap portion is less than the opening dimension of the opening.

In at least some examples, a planar shape of the opening is a circle, the opening dimension is a diameter d of the circle, and the second dimension of the at least one of the first gap portion and the second gap portion is a length L, where 0.1d ≤ L < d.

In at least some examples, the at least one of the first gap portion and the second gap portion has a cross section in the thickness direction of the carrier layer, and the opening has a centerline in the first direction; where in the second direction, an area of the cross section is set to gradually decrease in a direction away from the centerline.

In at least some examples, the first dimension of the at least one of the first gap portion and the second gap portion is a width; the at least one of the first gap portion and the second gap portion has a third dimension in a third direction, the third dimension is a height, and the third direction is perpendicular to the plane where the carrier layer is located; where in the second direction, at least one of the height and the width is set to gradually decrease in the direction away from the centerline.

In at least some examples, the height is less than or equal to one half of the thickness of the carrier layer.

In at least some examples, an opening dimension of the opening is 15 to 29 millimeters; the width is 150 to 200 microns; and the height is 150 to 200 microns.

In at least some examples, parallel to the plane where the carrier layer is located, a planar shape of the at least one of the first gap portion and the second gap portion is a crescent.

In at least some examples, the barrier layer includes or does not include a metal layer.

According to a second aspect of the present disclosure, provided is a packaging sheet, including a sheet-like composite layer described above.

In at least some examples, the packaging sheet includes a fold pattern, the fold pattern includes a first fold line and a second fold line, at least one of the first fold line and the second fold line extends along a second direction, the first fold line and the second fold line divide the packaging composite sheet into a first region, a second region, and a third region that are distributed along a first direction, and both the first direction and the second direction are parallel to a plane where the carrier layer is located and are perpendicular to each other; where both the opening and the gap portion are located in the first region.

In at least some examples, the packaging sheet is configured to be folded along the fold pattern to form a packaging container; the first region defines the top of the packaging container; the third region defines the bottom of the packaging container; the gap portion includes a first gap portion and a second gap portion spaced apart from each other in the first direction, where the first gap portion and the second gap portion are located at the top of the packaging container.

### DESCRIPTION OF THE DRAWINGS

To describe the technical solutions in the examples of the present disclosure more clearly, the accompanying drawings of the examples will be briefly described below. Apparently, the accompanying drawings describe below relate to merely some examples of the present disclosure, rather than limiting the present disclosure.
FIG. 1 is a schematic plan view of a packaging sheet according to an example of the present disclosure;
FIG. 2 is a schematic partially enlarged view of the packaging sheet in FIG. 1;
FIG. 2A is a schematic cross-sectional view taken along line A-A in FIG. 2; and
FIG. 2B is a schematic cross-sectional view taken along line B-B in FIG. 2.

### DESCRIPTION OF THE EMBODIMENTS

To make the objectives, technical solutions, and advantages of the examples of the present disclosure clearer, the technical solutions in the examples of the present disclosure will be clearly and completely described below with reference to the accompanying drawings of the examples of the present disclosure. Apparently, the described examples are some, rather than all, of the examples of the present disclosure. All other examples obtained by a person of ordinary skill in the art based on the described examples of the present disclosure without inventive effort shall fall within the scope of protection of the present disclosure.

Unless otherwise defined, technical terms or scientific terms used herein shall have ordinary meanings as understood by a person of ordinary skill in the art of the present disclosure. The terms "first" and "second" and similar terms used in the description and claims of the patent application of the present disclosure do not denote any order, quantity, or importance, but are merely intended to distinguish between different constituents. The term "comprising", "including", or a similar term means that an element or object that occurs before "comprising" or "including" encompasses an element or an object or its equivalents listed after "comprising" or "including" without excluding other elements or objects. The term "connect", "link", or a similar term is not limited to physical or mechanical connections, but may include electrical connections, whether direct or indirect. "Above", "below", "left", "right", and the like are only used to indicate relative positional relationships, which may change accordingly when an absolute position of a described object is changed.

Generally, in production of a sheet-like composite layer, different layers may be laminated together through a plurality of separate laminating operations. The sheet-like composite layer may include a carrier layer, a barrier layer, an inner cover layer, and an outer cover layer. The carrier layer is formed from a paper sheet or a paperboard. The inner cover layer and the outer cover layer are each formed from a thermoplastic film. During production, the barrier layer and the inner cover layer are first laminated on one side of the carrier layer, and then the outer cover layer is laminated on the other side. To provide sufficient adhesion between the barrier layer and the carrier layer, an adhesion layer is further applied between the barrier layer and the inner cover layer.

When a packaging container has an opening such as a straw hole or a flow guide hole, the carrier layer is also provided with a corresponding opening. When the barrier layer and the adhesion layer are laminated onto an edge of the opening of the carrier layer, the adhesion layer and the outer cover layer are laminated together and a void is likely to be formed therebetween due to abrupt reduction in the thickness of the carrier layer. This void not only makes it difficult to tear off the film layer at the opening, which limits the opening of packages, but also creates a relatively large light-leakage region, which affects the quality of food inside the packaging container.

To this end, the examples of the present disclosure provide a sheet-like composite layer and a packaging sheet. The sheet-like composite layer includes a carrier layer, a barrier layer, and an adhesive layer. The barrier layer is superposed on the carrier layer. The adhesive layer is located between the carrier layer and the barrier layer and is configured to adhere the carrier layer and the barrier layer. The carrier layer has an opening, and the barrier layer and the adhesive layer are configured to extend along a plane where the carrier layer is located and to cover the opening. The carrier layer includes an edge surrounding the opening, a gap portion is formed between the adhesive layer and the barrier layer in a thickness direction of the carrier layer, and the gap portion is configured to extend along part of the edge.

When the gap portion extends along the entire edge and surrounds the opening, it is difficult to tear off a film at the opening, thus hindering package opening. Moreover, since the gap portion is light-transmitting, when the gap portion surrounds the opening, a relatively large light-leakage area may be formed, which is inconducive to long-term storage of contents inside the packaging container, especially for liquid food such as milk and yogurt, and is likely to cause food spoilage.

Compared with the above case in which the gap portion extends along the entire edge and surrounds the opening, in the sheet-like composite layer in the examples of the present application, by extending the gap portion along only part of the edge, a force required for the film at the opening is reduced, thereby facilitating package opening, reducing the light-leakage area, and facilitating long-term storage of contents.

The present disclosure will be described below using several specific examples. To make the description below of the examples of the present disclosure clear and concise, detailed description of known functions and known components may be omitted. When any component in the examples of the present disclosure appears in one or more drawings, that component may be denoted by the same reference numeral in each drawing.

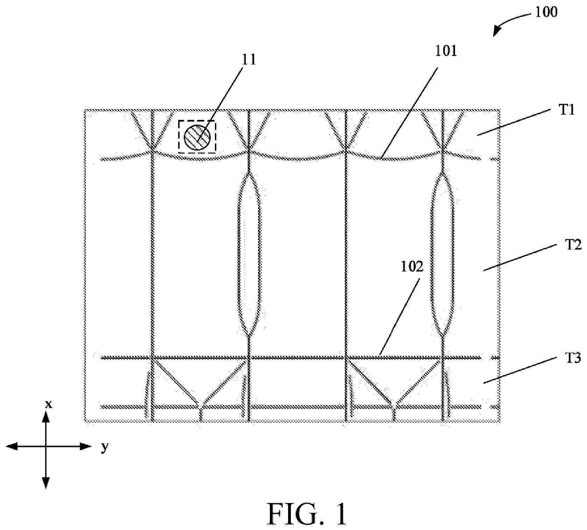

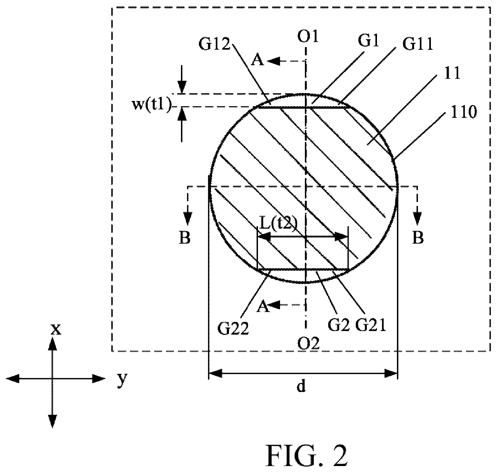

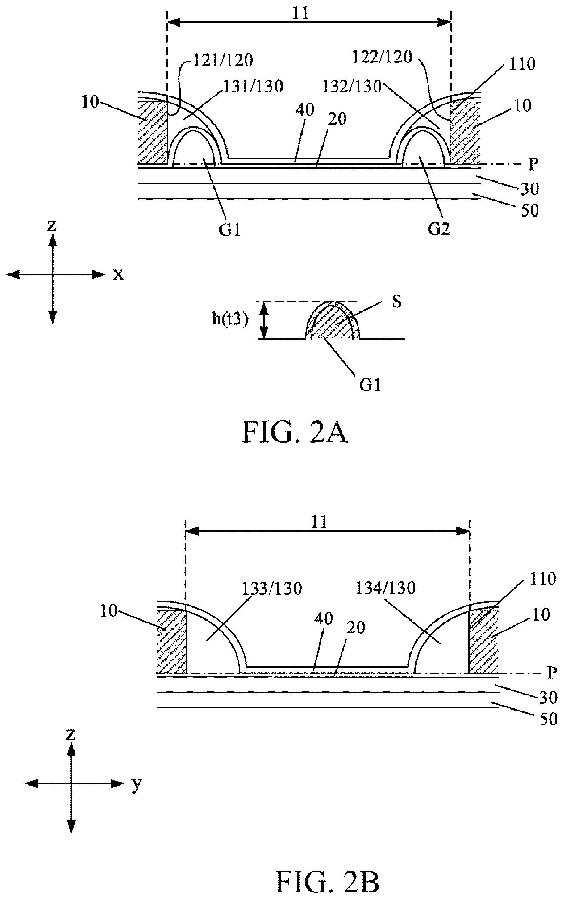

FIG. 1 is a schematic plan view of a packaging sheet according to an example of the present disclosure. FIG. 2 is a schematic partially enlarged view of the packaging sheet in FIG. 1. FIG. 2A is a schematic cross-sectional view taken along line A-A in FIG. 2. FIG. 2B is a schematic cross-sectional view taken along line B-B in FIG. 2.

As shown in FIG. 1, a packaging sheet 100 provided in an example of the present disclosure includes a fold pattern. The packaging sheet 100 may be folded along the fold pattern to then form a packaging container with a peaked top.

It should be understood that the fold pattern shown in FIG. 1 is for illustrative purposes only, and the packaging sheet 100 may also have a fold pattern in another form, e.g., a fold pattern enabling the folded packaging container to have a flat top. In the examples of the present disclosure, no limitation is placed thereon.

For example, the fold pattern may include a first fold line 101 and a second fold line 102. At least one of the first fold line 101 and the second fold line 102 extends along a second direction (e.g., a y-direction shown in the figure). The first fold line 101 and the second fold line 102 divide the packaging composite sheet 100 into a first region T1, a second region T2, and a third region T3 that are distributed along a first direction (e.g., an x-direction shown in the figure).

As shown in FIG. 1, when the packaging sheet 100 is folded, a top perimeter of the packaging container may be formed from the first fold line 101, and a bottom perimeter of the packaging container may be formed from the second fold line 102. As such, the first region T1 defines the top of the containment container, the third region T3 defines the bottom of the packaging container, and the second region T2 defines sides connecting the top and the bottom of the packaging container.

As shown in FIG. 1, for example, the first fold line 101 includes a plurality of arcs, of which an advantage is that a top perimeter with arcs can be formed, aesthetically improving the appearance of the product, and also preventing accumulation of liquids on an inner wall of the top perimeter when liquids is poured from the top. For example, the second fold line 102 is a straight line, which makes the bottom of the thus formed packaging container more stable.

It should be understood that the shapes of the first fold line and the second fold line in the examples of the present disclosure are merely illustrative. The first fold line 101 may as well take another shape like a straight line, and the second fold line may as well take another shape like an arc. In the examples of the present disclosure, no limitation is placed thereon.

The packaging sheet 100 in the examples of the present disclosure may be formed by cutting a sheet-like composite layer in the form of a continuous web. As shown in FIG. 2A and FIG. 2B, the sheet-like composite layer has a superposed structure. For example, the sheet-like composite layer includes a carrier layer 10, an adhesive layer 20, a barrier layer 30, an outer cover layer 40, and an inner cover layer 50 that are superposed.

The carrier layer 10 as a main body layer of the sheet-like composite layer provides a support function, and may, for example, be formed from a material such as a paper sheet or a paperboard. As shown in FIG. 1, FIG. 2A, and FIG. 2B, the carrier layer 10 may include an opening 11 provided in the first region T1. Providing the opening 11 in the carrier layer 10 is conducive to forming a straw hole or a flow guide hole covered with a film on the finally formed packaging container.

FIG. 2 is a schematic partially enlarged view of the dashed-line rectangular region in FIG. 1. As shown in FIG. 2 and FIG. 2A, the carrier layer 10 has an edge 110 that defines the opening 11. The edge 110 surrounds the periphery of the opening 11 to define a region where the opening 11 is located.

In the examples of the present disclosure, the planar shape of the opening 11 is a circle. It may be understood that in other examples, the planar shape of the opening 11 may also be another geometric shape such as a rectangle, a triangle, or a rhombus. In the examples of the present disclosure, no limitation is placed thereon.

As shown in FIG. 2A and FIG. 2B, the opening 11 penetrates the carrier layer 10 in a thickness direction of the carrier layer 10 (e.g., a z-direction shown in the figure).

The barrier layer 30 is superposed on the carrier layer 10. The adhesive layer 20 is located between the carrier layer 10 and the barrier layer 30 and is configured to adhere the carrier layer 10 and the barrier layer 30. That is, the adhesive layer 20 is located between the carrier layer 10 and the barrier layer 30 in the z-direction, which improves robustness of the adhesion therebetween. In some examples, the adhesive layer 20 may further include a light-blocking material to prevent external light from irradiating into the packaging container. For example, the adhesive layer may include a polymer layer (e.g., LDPE) distributed with color master batches and an adhesive agent layer. The polymer layer is adhered onto the carrier layer 10 by an adhesive agent (e.g., ethylene acrylic acid copolymer, EAA).

In the examples of the present disclosure, the barrier layer 30 has water-blocking and oxygen-blocking properties. In some examples, the barrier layer 30 may include an aluminum foil layer. In some other examples, the barrier layer 30 may include a superposed structure without any metal layer. This is more conducive to recycling of packaging materials, thus reducing or even eliminating environmental damage caused by packaging containers.

For example, when the barrier layer 30 includes no metal layer, the barrier layer may include a substrate layer and an additional layer that are superposed. In FIG. 2A, the substrate layer is located on the side of the outer cover layer 50 that faces the adhesive layer 20, and the additional layer is located on the side of the substrate layer that faces the adhesive layer 20, i.e., located between the substrate layer and the adhesive layer 20.

For example, the substrate layer mainly includes a polyolefin material, e.g., at least one of high-density polyethylene (HDPE), medium-density polyethylene (MDPE), low-density polyethylene (LDPE), and metallocene polyethylene (mPE).

The additional layer may have a single-layer structure or a multi-layer structure, e.g., a two-layer structure. When a single-layer structure is provided, the number of barrier layers can be reduced. When a two-layer or multi-layer structure is provided, practical production is facilitated, and the water-blocking and oxygen-blocking properties of the barrier layer are further improved.

For example, when the additional layer uses a two-layer structure, one layer is polyvinyl alcohol and the other layer includes at least one of a metal oxide and a non-metal oxide. For example, the metal oxide may be selected from those suitable in the art to achieve an effect of blocking light, vapor, and/or gas. Preferably, the metal oxide is a metal oxide of aluminum, iron, copper, or titanium, and more preferably, aluminum oxide. For example, the non-metal oxide may be selected from those suitable in the art to achieve an effect of blocking light, vapor, and/or gas. For example, the non-metal oxide is silicon oxide.

As shown in FIG. 2A and FIG. 2B, the barrier layer 30 and the adhesive layer 20 are configured to extend along a plane P where the carrier layer 10 is located and to cover the opening 11. That is, the barrier layer 30 and the adhesive layer 20 extend across the opening 11 to thereby cover the opening 11. This can avoid entry of contaminants from the opening 11 after the contents are filled into the packaging container.

As shown in FIG. 2, FIG. 2A, and FIG. 2B, the carrier layer 10 includes the edge 110 surrounding the opening 11, a first gap portion G1 and a second gap portion G2 are formed between the adhesive layer 20 and the barrier layer 30 in the z-direction, and the first gap portion G1 and the second gap portion G2 are configured to extend along part of the edge 110. At the first gap portion G1 and the second gap portion G2, the adhesive layer 20 and the barrier layer 30 are spaced apart from each other with an air gap or an air hole (also referred to as air entrapment) formed therebetween.

It can be seen from FIG. 2 that, the first gap portion G1 and the second gap portion G2 each extend along only part of the edge 110 instead of the entire edge 110, and thus do not surround the periphery of the opening 11.

As shown in FIG. 1, the first gap portion G1 and the second gap portion G2 are located in the first region T1, and therefore the first gap portion G1 and the second gap portion G2 are located at the top of the packaging container.

When the gap portion extends along the entire edge 110 and surrounds the opening 11, it is difficult to tear off a film at the opening 11, thus hindering package opening. Moreover, since the gap portion is light-transmitting, if the gap portion surrounds the opening 11, a relatively large light-leakage area may be formed, which is inconducive to long-term storage of contents inside the packaging container, especially for liquid food such as milk and yogurt, and is likely to cause food spoilage.

Compared with the case in which the gap portion extends along the entire edge 110 and surrounds the opening 11, in the examples of the present application, the first gap portion G1 and the second gap portion G2 each extend along only part of the edge 110, reducing a force required for the film at the opening, thereby facilitating package opening, reducing the light-leakage area, and facilitating long-term storage of contents.

As shown in FIG. 2 and FIG. 2A, the carrier layer 10 includes a sidewall 120 located at the edge 110, and the sidewall 120 includes a first sidewall 121 and a second sidewall 122 opposite to each other in the x-direction (the x-direction is parallel to the plane P where the carrier layer 10 is located, as shown in the figure). The first gap portion G1 and the second gap portion G2 are spaced apart from each other in the x-direction. The first gap portion G1 is configured to extend along part of the first sidewall 121, and the second gap portion G2 is configured to extend along part of the second sidewall 122.

Since the carrier layer 30 provides a support function, the thickness of the carrier layer 30 is greater than the thicknesses of the barrier layer 30 and the adhesive layer 30. Therefore, the carrier layer 10 is formed with a sidewall at the edge 110. By arranging the first gap portion G1 to extend along part of the first sidewall 121 and the second gap portion G2 to extend along part of the second sidewall 122, it is possible to provide an existing packaging sheet with a space capable of accommodating the first gap portion G1 and the second gap portion G2 without changing the material and the structure of the existing packaging sheet, thereby reducing a force required for the film at the opening and facilitating package opening.

As shown in FIG. 2, the first gap portion G1 and the second gap portion G2 are not connected to each other. That is, the first gap portion G1 and the second gap portion G2 do not communicate with each other.

In the examples of the present disclosure, the first gap portion G1 and the second gap portion G2 are formed by deformation of the adhesive layer 20 during film forming (for example, molding through melt extrusion and coating). When the first gap portion G1 and the second gap portion G2 communicate with each other, it means that the adhesive layer 20 is relatively heavily stretched, and the volume of the air gap or the air hole formed between the adhesive layer 20 and the barrier layer 30 is relatively large. When the adhesive layer 20 contains light-shielding materials such as color master batches, such relatively heavy stretch is inconducive to uniform distribution of the color master batches, and the light-blocking property of the adhesive layer 20 is likely to deteriorate.

In the examples of the present application, by making the first gap portion G1 and the second gap portion G2 not connected to each other, the volume of the air hole is reduced. This can alleviate to some extent the light transmission problem caused by non-uniform distribution of light-shielding materials due to the stretch of the adhesive layer during formation of the air hole.

As shown in FIG. 2, the first gap portion G1 may include a first end G11 and a second end G12 opposite to each other in the y-direction (the y-direction being parallel to the plane P where the carrier layer 10 is located and perpendicular to the x-direction). The second gap portion G2 includes a third end G21 and a fourth end G22 opposite to each other in the y-direction. The first end G11 and the third end G21 are spaced apart from each other in the x-direction, and the second end G12 and the fourth end G22 are spaced apart from each other in the x-direction. Thus, it can be further ensured that the first gap portion G1 and the second gap portion G2 are not connected to each other.

As shown in FIG. 2A and FIG. 2B, the outer cover layer 40 is superposed on the carrier layer 10 and located on an opposite side of the carrier layer 10 to the adhesive layer 20 and the barrier layer 30. For example, the adhesive layer 20 and the barrier layer 90 are located on a first side of the carrier layer 10 (a lower side shown in the figure), and the outer cover layer 4 is located on a second side of the carrier layer (an upper side shown in the figure). The outer cover layer 40 is configured to extend and to cover the opening 11, and the outer cover layer 40 is adhered with the adhesive layer 20 in the opening 11. The outer cover layer 40.

In fabrication of the sheet-like composite layer, in addition to the carrier layer 10, the adhesive layer 20, and the barrier layer 30, further provided is the outer cover layer, which can not only improve the sealing effect at the opening 11 but can also be used for package coloring or formation of a patterned layer. In some examples, the outer cover layer includes a polymeric material, such as polyethylene.

As shown in FIG. 2A and FIG. 2B, an edge void 130 is defined between the carrier layer 10, the adhesive layer 20, and the outer cover layer 40, and both the first gap portion G1 and the second gap portion G2 are located in the edge void 130.

In the examples of the present disclosure, the formation of the edge void 130 is related to the thickness of the carrier layer 10. When the outer cover layer 40 is laminated on the upper side of the carrier layer 10, the carrier layer 10 becomes thinner under compressive stress. However, as the carrier layer 10 has a certain degree of resilience, when the carrier layer rebounds, the edge void 130 is formed between the sidewall 120 of the carrier layer 10, the outer cover layer 40, and the adhesive layer 20, and the edge void 130 happens to provide an accommodation space for the first gap portion G1 and the second gap portion G2.

As previously mentioned, the carrier layer 10 includes the sidewall 120 located at the edge 110, and the sidewall 120 extends along the entire edge 110 of the carrier layer 10. Therefore, the edge void 130 also extends along the entire edge 110 of the carrier layer 30. This is more conducive to the provision of an accommodation space for the first gap portion G1 and the second gap portion G2.

As shown in FIG. 2A, for example, the edge void 130 includes a first void portion 131 and a second void portion 132 opposite to each other in the x-direction. The first gap portion G1 is accommodated in the first void portion 131, and the second gap portion G2 is accommodated in the second void portion 132.

As shown in FIG. 2B, for example, the edge void 130 further includes a third void portion 133 and a fourth void portion 134 opposite to each other in the y-direction. The first void portion 131, the second void portion 132, the third void portion 133, and the fourth void portion 134 are connected end to end to constitute the edge void 130.

In the examples of the present disclosure, the first gap portion G1 and the second gap portion G2 are provided in neither of the third void portion 133 and the fourth void portion 134, that is, no gap portion is provided in the third void portion 133 or the fourth void portion 134. This is advantageous in avoiding forming an excessively large air hole, thus alleviating the light transmission problem caused by non-uniform distribution of light-shielding materials due to the stretch of the adhesive layer during formation of the air hole.

As shown in FIG. 2A, the first gap portion G1 and the second gap portion G2 each include a protrusion provided on the adhesive layer 20. In the z direction, the protrusion protrudes in a direction away from the barrier layer 30, that is, towards the outer side of the sheet-like composite layer 100. However, the gap portion in the examples of the present disclosure is not limited to this form. Alternatively, a part of the gap portion may protrude towards the outer side of the sheet-like composite layer 100, another part may protrude towards the inner side of the sheet-like composite layer 100, and so on and so forth.

In the examples of the present disclosure, making the first gap portion G1 and the second gap portion G2 protrude in the direction away from the barrier layer 30 is conducive to formation of the first gap portion G1 and the second gap portion G2 in the edge void 130, thereby sufficiently improving utilization of the edge void.

In the examples of the present disclosure, orthographic projections of the first gap portion G1 and the second gap portion G2 on the plane P where the carrier layer 10 is located are located in the opening 11. As such, the performance of the composite layer in a peripheral portion of the opening 11 may not be affected.

As shown in FIG. 2A, the inner cover layer 50 is located on an opposite side of the barrier layer 30 to the outer cover layer 40. For example, the inner cover layer 50 is located on the lower side of the barrier layer 30 and is used for sealing or closing. In some examples, the inner cover layer 50 includes a polymeric material, such as polyethylene.

In the examples of the present disclosure, the first gap portion G1 and the second gap portion G2 may be symmetrically distributed, as shown in FIG. 1, or may be asymmetrically distributed. In addition, the first gap portion G1 and the second gap portion G2 may have the same dimensions or different dimensions. In the examples of the present disclosure, no limitation is placed thereon.

Description will be provided below using an example in which the first gap portion G1 and the second gap portion G2 have the same structure and dimensions. It can be understood that the description below may be directed to the first gap portion G1 or the second gap portion G2.

As shown in FIG. 2, each of the first gap portion G1 and the second gap portion G2 has a first dimension t1 in the x-direction and a second dimension t2 in the y-direction, and the second dimension t2 is greater than the first dimension t1. For example, the second dimension t2 is 1.2 to 5 times the first dimension t1. The above arrangement is advantageous in increasing the length-to-width ratios of the first gap portion G1 and the second gap portion G2, thereby facilitating formation of the gap portions in the elongated edge void 130.

As shown in FIG. 2, the opening 11 has an opening dimension in the y-direction, and the second dimension t2 of each of the first gap portion G1 and the second gap portion G2 is less than the opening dimension of the opening 11. This can prevent the first gap portion G1 and the second gap portion G2 from being connected to each other, and can also reduce the volume of the air hole.

As shown in FIG. 2, for example, a planar shape of the opening 11 is a circle, the opening dimension is a diameter d of the circle. The second dimension t2 of each of the first gap portion G1 and the second gap portion G2 is a length L, for example, where the length L and the diameter d satisfy the following relationship: 0.1d ≤ L < d. That is, the length L is greater than or equal to 0.1 times the diameter d and less than or equal to the diameter d. Thus, it can be further ensured that the first gap portion G1 and the second gap portion G2 are not connected to each other. For example, the opening dimension of the opening 11 is 15 to 29 microns, and the length L is 2 to 14 microns.

As shown in FIG. 2A, each of the first gap portion G1 and the second gap portion G2 has a cross section in the z direction, and the opening 11 has a centerline O1O2 in the x-direction. In the y-direction, the area S of the cross section is set to gradually decrease in a direction away from the centerline 0102. That is, the cross section of the first gap portion G1 has the smallest area at the first end G11 and the second end G12 thereof and has the largest area at a position where it intersects the centerline O1O2.

Compared with the case in which the area of the cross section at each position is equal in the y-direction, the above arrangement can further reduce the area of the light-leakage region, facilitating storage of contents.

As shown in FIG. 2 and FIG. 2A, for example, the first dimension t1 of each of the first gap portion G1 and the second gap portion G2 is a width w. Each of the first gap portion G1 and the second gap portion G2 has a third dimension t3 in the z-direction, and the third dimension t3 is a height h, for example. In the y-direction, at least one of the height h and the width w is set to gradually decrease in the direction away from the centerline 0102.

As shown in FIG. 2 and FIG. 2A, in some examples, the height h remains unchanged and the width w gradually decreases in the direction away from the centerline O1O2; and in some other examples, the width w remains unchanged, and the height h gradually decreases in the direction away from the centerline 0102. Both cases can achieve the objectives of the present application.

In some examples, the height h is less than or equal to one half of the thickness of the carrier layer 10. For example, the thickness of the carrier layer 10 is 400 to 800 microns, and the height h is 150 to 200 microns.

For example, the width w is 150 to 200 microns.

As shown in FIG. 2, parallel to the plane P where the carrier layer 30 is located, a planar shape of each of the first gap portion G1 and the second gap portion G2 is a crescent. This is advantageous in gradually decreasing the respective cross sections of the first gap portion G1 and the second gap portion G2 in the direction away from the centerline 0102.

In the sheet-like composite layer and the packaging sheet provided in the examples of the present application, by extending the gap portion along only part of the edge, a force required for the film at the opening can be reduced, thereby facilitating package opening, reducing the light-leakage area, and facilitating long-term storage of contents.

Herein, the following points should be noted:
(1) Only structures related to the examples of the present disclosure are involved in the accompanying drawings of the examples of the present disclosure. For other structures, reference may be made to a common design.
(2) The examples of the present disclosure and features in the examples may be combined with one another to obtain new examples provided that no conflict occurs.

The above description is merely exemplary embodiments of the present disclosure and is not intended to limit the scope of protection of the present disclosure, which is subject to the appended claims.

In addition, the present disclosure may further include the following examples or instances.
(1) A sheet-like composite layer, including:
   a carrier layer;
   a barrier layer, superposed on the carrier layer; and
   an adhesive layer, located between the carrier layer and the barrier layer and configured to adhere the carrier layer and the barrier layer;
   wherein the carrier layer has an opening, and the barrier layer and the adhesive layer are configured to extend along a plane where the carrier layer is located and to cover the opening, and
   wherein the carrier layer comprises an edge surrounding the opening, a gap portion is formed between the adhesive layer and the barrier layer in a thickness direction of the carrier layer, and the gap portion is configured to extend along part of the edge.
(2) The sheet-like composite layer according to (1), wherein:
   the carrier layer comprises a sidewall located at the edge, and the sidewall comprises a first sidewall and a second sidewall opposite to each other in a first direction parallel to the plane where the carrier layer is located; and
   the gap portion comprises a first gap portion and a second gap portion spaced apart from each other in the first direction; and
   wherein the first gap portion is configured to extend along part of the first sidewall, and the second gap portion is configured to extend along part of the second sidewall.
(3) The sheet-like composite layer according to (2), wherein the first gap portion and the second gap portion are not connected to each other.
(4) The sheet-like composite layer according to (3), wherein:
   the first gap portion comprises a first end and a second end opposite to each other in a second direction parallel to the plane where the carrier layer is located and perpendicular to the first direction; and
   the second gap portion comprises a third end and a fourth end opposite to each other in the second direction; and
   wherein the first end and the third end are spaced apart from each other in the first direction, and the second end and the fourth end are spaced apart from each other in the first direction.
(5) The sheet-like composite layer according to any one of (1) to (4), further including:
   an outer cover layer, superposed on the carrier layer and located on an opposite side of the carrier layer to the adhesive layer and the barrier layer,
   wherein the outer cover layer is configured to extend and to cover the opening, and the outer cover layer is adhered with the adhesive layer in the opening.
(6) The sheet-like composite layer according to (5),
   wherein an edge void is defined between the carrier layer, the adhesive layer, and the outer cover layer, and
   wherein the gap portion is located in the edge void.
(7) The sheet-like composite layer according to (6), wherein
   the carrier layer comprises a sidewall located at the edge, and the sidewall extends along the entire edge of the carrier layer, such that the edge void extends along the entire edge of the carrier layer.
(8) The sheet-like composite layer according to (7), wherein
   the gap portion comprises a first gap portion and a second gap portion spaced apart from each other in the first direction;
   the edge void comprises a first void portion and a second void portion opposite to each other in the first direction; and
   the first gap portion is located in the first void portion, and the second gap portion is located in the second void portion.
(9) The sheet-like composite layer according to (8), wherein
   the edge void further comprises a third void portion and a fourth void portion opposite to each other in the second direction, and the first void portion, the second void portion, the third void portion, and the fourth void portion are connected end to end to constitute the edge void; and
   wherein the first gap portion and the second gap portion are provided in neither of the third void portion and the fourth void portion.
(10) The sheet-like composite layer according to any one of (2) to (9), wherein the first gap portion and the second gap portion each comprise a protrusion provided on the adhesive layer, and in the thickness direction of the carrier layer, the protrusion protrudes in a direction away from the barrier layer.
(11) The sheet-like composite layer according to any one of (2) to (9), wherein
   at least one of the first gap portion and the second gap portion has a first dimension in the first direction and a second dimension in the second direction parallel to the plane where the carrier layer is located and perpendicular to the first direction; and
   wherein the second dimension is greater than the first dimension.
(12) The sheet-like composite layer according to (11), wherein the opening has an opening dimension in the second direction, and the second dimension of the at least one of the first gap portion and the second gap portion is less than the opening dimension of the opening.
(13) The sheet-like composite layer according to (12), wherein a planar shape of the opening is a circle, the opening dimension is a diameter d of the circle, and the second dimension of the at least one of the first gap portion and the second gap portion is a length L,
   where 0.1d ≤ L < d.
(14) The sheet-like composite layer according to (11), wherein
   the at least one of the first gap portion and the second gap portion has a cross section in the thickness direction of the carrier layer, and the opening has a centerline in the first direction; and
   wherein in the second direction, an area of the cross section is set to gradually decrease in a direction away from the centerline.
(15) The sheet-like composite layer according to (14), wherein
   the first dimension of the at least one of the first gap portion and the second gap portion is a width; and
   the at least one of the first gap portion and the second gap portion has a third dimension in a third direction, the third dimension is a height, and the third direction is perpendicular to the plane where the carrier layer is located; and
   wherein in the second direction, at least one of the height and the width is set to gradually decrease in the direction away from the centerline.
(16) The sheet-like composite layer according to (15), wherein the height is less than or equal to one half of the thickness of the carrier layer.
(17) The sheet-like composite layer according to (15), wherein
   an opening dimension of the opening is 15 to 29 millimeters;
   the width is 150 to 200 microns; and
   the height is 150 to 200 microns.
(18) The sheet-like composite layer according to (11), wherein
   parallel to the plane where the carrier layer is located, a planar shape of the at least one of the first gap portion and the second gap portion is a crescent.
(19) The sheet-like composite layer according to any one of (1) to (18), wherein the barrier layer comprises or does not comprise a metal layer.
(20) A packaging sheet, including the sheet-like composite layer according to any one of (1) to (19).
(21) The packaging sheet according to (20), wherein
   the packaging sheet comprises a fold pattern, the fold pattern comprises a first fold line and a second fold line, at least one of the first fold line and the second fold line extends along a second direction, the first fold line and the second fold line divide the packaging composite sheet into a first region, a second region, and a third region that are distributed along a first direction, and both the first direction and the second direction are parallel to a plane where the carrier layer is located and are perpendicular to each other; and
   wherein both the opening and the gap portion are located in the first region.
(22) The packaging sheet according to (21), wherein
   the packaging sheet is configured to be folded along the fold pattern to form a packaging container;
   the first region defines the top of the packaging container;
   the third region defines the bottom of the packaging container; and
   the gap portion comprises a first gap portion and a second gap portion spaced apart from each other in the first direction, wherein the first gap portion and the second gap portion are located at the top of the packaging container.

Herein, the following points should be noted:
(1) Only structures related to the examples of the present disclosure are involved in the accompanying drawings of the examples of the present disclosure. For other structures, reference may be made to a common design.
(2) The examples of the present disclosure and features in the examples may be combined with one another to obtain new examples provided that no conflict occurs.

The above description is merely exemplary embodiments of the present disclosure and is not intended to limit the scope of protection of the present disclosure, which is subject to the appended claims.

## Claims

1. A sheet-like composite layer, comprising:
a carrier layer;
a barrier layer, superposed on the carrier layer; and
an adhesive layer, located between the carrier layer and the barrier layer, and configured to adhere the carrier layer and the barrier layer;
wherein the carrier layer has an opening, and the barrier layer and the adhesive layer are configured to extend along a plane where the carrier layer is located and to cover the opening, and
wherein the carrier layer comprises an edge surrounding the opening, a gap portion is formed between the adhesive layer and the barrier layer in a thickness direction of the carrier layer, and the gap portion is configured to extend along part of the edge.

2. The sheet-like composite layer according to claim 1, wherein:
the carrier layer comprises a sidewall located at the edge, and the sidewall comprises a first sidewall and a second sidewall opposite to each other in a first direction parallel to the plane where the carrier layer is located; and
the gap portion comprises a first gap portion and a second gap portion spaced apart from each other in the first direction; and
wherein the first gap portion is configured to extend along part of the first sidewall, and the second gap portion is configured to extend along part of the second sidewall.

3. The sheet-like composite layer according to claim 2, wherein the first gap portion and the second gap portion are not connected to each other.

4. The sheet-like composite layer according to claim 3, wherein:
the first gap portion comprises a first end and a second end opposite to each other in a second direction parallel to the plane where the carrier layer is located and perpendicular to the first direction; and
the second gap portion comprises a third end and a fourth end opposite to each other in the second direction; and
wherein the first end and the third end are spaced apart from each other in the first direction, and the second end and the fourth end are spaced apart from each other in the first direction.

5. The sheet-like composite layer according to any one of claims 1 to 4, further comprising:
an outer cover layer, superposed on the carrier layer and located on an opposite side of the carrier layer to the adhesive layer and the barrier layer,
wherein the outer cover layer is configured to extend and to cover the opening, and the outer cover layer is adhered with the adhesive layer in the opening.

6. The sheet-like composite layer according to claim 5,
wherein an edge void is defined between the carrier layer, the adhesive layer, and the outer cover layer, and
wherein the gap portion is located in the edge void.

7. The sheet-like composite layer according to claim 6, wherein
the carrier layer comprises a sidewall located at the edge, and the sidewall extends along the entire edge of the carrier layer, such that the edge void extends along the entire edge of the carrier layer.

8. The sheet-like composite layer according to claim 7, wherein
the gap portion comprises a first gap portion and a second gap portion spaced apart from each other in the first direction;
the edge void comprises a first void portion and a second void portion opposite to each other in the first direction; and
the first gap portion is located in the first void portion, and the second gap portion is located in the second void portion.

9. The sheet-like composite layer according to claim 8, wherein
the edge void further comprises a third void portion and a fourth void portion opposite to each other in the second direction, and the first void portion, the second void portion, the third void portion, and the fourth void portion are connected end to end to constitute the edge void; and
wherein the first gap portion and the second gap portion are provided in neither of the third void portion and the fourth void portion.

10. The sheet-like composite layer according to any one of claims 2 to 9, wherein the first gap portion and the second gap portion each comprise a protrusion provided on the adhesive layer, and in the thickness direction of the carrier layer, the protrusion protrudes in a direction away from the barrier layer.

11. The sheet-like composite layer according to any one of claims 2 to 9, wherein
at least one of the first gap portion and the second gap portion has a first dimension in the first direction and a second dimension in the second direction parallel to the plane where the carrier layer is located and perpendicular to the first direction; and
wherein the second dimension is greater than the first dimension.

12. The sheet-like composite layer according to claim 11, wherein the opening has an opening dimension in the second direction, and the second dimension of the at least one of the first gap portion and the second gap portion is less than the opening dimension of the opening.

13. The sheet-like composite layer according to claim 12, wherein a planar shape of the opening is a circle, the opening dimension is a diameter d of the circle, and the second dimension of the at least one of the first gap portion and the second gap portion is a length L,
where 0.1d ≤ L < d.

14. The sheet-like composite layer according to claim 11, wherein
at least one of the first gap portion and the second gap portion has a cross section in the thickness direction of the carrier layer, and the opening has a centerline in the first direction; and
wherein in the second direction, an area of the cross section is set to gradually decrease in a direction away from the centerline.

15. The sheet-like composite layer according to claim 14, wherein
the first dimension of the at least one of the first gap portion and the second gap portion is a width; and
at least one of the first gap portion and the second gap portion has a third dimension in a third direction, the third dimension is a height, and the third direction is perpendicular to the plane where the carrier layer is located; and
wherein in the second direction, at least one of the height and the width is set to gradually decrease in the direction away from the centerline.

16. The sheet-like composite layer according to claim 15, wherein the height is less than or equal to one half of the thickness of the carrier layer.

17. The sheet-like composite layer according to claim 15, wherein
an opening dimension of the opening is 15 to 29 millimeters;
the width is 150 to 200 microns; and
the height is 150 to 200 microns.

18. The sheet-like composite layer according to claim 11, wherein
parallel to the plane where the carrier layer is located, a planar shape of the at least one of the first gap portion and the second gap portion is a crescent.

19. The sheet-like composite layer according to any one of claims 1 to 18, wherein the barrier layer comprises or does not comprise a metal layer.

20. A packaging sheet, comprising the sheet-like composite layer according to any one of claims 1 to 19.

21. The packaging sheet according to claim 20, wherein
the packaging sheet comprises a fold pattern, the fold pattern comprises a first fold line and a second fold line, at least one of the first fold line and the second fold line extends along a second direction, the first fold line and the second fold line divide the packaging composite sheet into a first region, a second region, and a third region that are distributed along a first direction, and both the first direction and the second direction are parallel to a plane where the carrier layer is located and are perpendicular to each other; and
wherein both the opening and the gap portion are located in the first region.

22. The packaging sheet according to claim 21, wherein
the packaging sheet is configured to be folded along the fold pattern to form a packaging container;
the first region defines the top of the packaging container;
the third region defines the bottom of the packaging container; and
the gap portion comprises a first gap portion and a second gap portion spaced apart from each other in the first direction, wherein the first gap portion and the second gap portion are located at the top of the packaging container.
